# FASCICULE DE BREVET EUROPEEN

(11) **EP 3 185 089 B1**
(45) Date de publication et mention de la délivrance du brevet: **06.03.2019**
(21) Numéro de dépôt: 15201458.5
(22) Date de dépôt: 21.12.2015
(51) Int. Cl.: G04C 3/14

(54) **MODULE MOTEUR POUR MONTRE**
MOTORMODUL FÜR ARMBANDUHR
MOTOR MODULE FOR A WATCH

(43) Date de publication de la demande: 28.06.2017
(73) Titulaire: ETA SA Manufacture Horlogère Suisse, 2540 Grenchen (CH)
(72) Inventeur: Lagorgette, Pascal, 2502 Bienne (CH); Balmer, Raphaël, 2824 Vicques (CH)
(74) Mandataire: Giraud, Eric

(56) Documents cités:
- EP-A1- 2 813 904
- FR-A1- 2 518 775

## Description

### Domaine de l'invention

L'invention concerne un module-moteur pour montre, inscrit dans un secteur angulaire autour d'un axe de pivotement principal, ledit secteur angulaire ayant un angle d'ouverture par rapport audit axe de pivotement principal, ledit module-moteur comportant au moins un moteur comportant une bobine et entraînant un rouage comportant au moins un arbre secondaire de sortie qui définit un axe de pivotement secondaire parallèle audit axe principal, et lequel arbre secondaire de sortie, ou bien est agencé pour porter un mobile de sortie pivotant autour dudit axe de pivotement secondaire, ou bien comporte directement un tel mobile de sortie, ledit module-moteur comportant des connexions principales de liaison au moins électrique avec une structure ou avec un autre module-moteur, et des liaisons planes au moins mécaniques agencées pour coopérer dans une fixation indexée géométriquement, dans un plan perpendiculaire audit arbre de sortie, avec un autre module-moteur de même type, chaque dite bobine étant connectée électriquement à deux dites liaisons planes quand lesdites liaisons planes sont aussi des liaisons électriques de puissance ou/et de commande.

L'invention concerne encore un groupe de motorisation pour montre, comportant des moyens d'alimentation et de commande.

L'invention concerne encore une montre comportant un tel groupe de motorisation.

L'invention concerne principalement le domaine des montres à mouvements électro-mécaniques, ou électroniques.

### Arrière-plan de l'invention

On connaît des mouvements électro-mécaniques, ou électroniques, notamment dans la gamme de ETA Manufacture Horlogère Suisse SA, qui comportent deux aiguilles liées, ou trois aiguilles liées, ou deux aiguilles indépendantes, ou une aiguille. Mais on ne connaît pas de module-moteur comportant au moins trois aiguilles indépendantes.

L'intégration d'un module-moteur dans une construction non horlogère, telle que circuit imprimé (dit PCB) avec afficheur (dit display), n'est pas aisée, pour des raisons d'encombrement.

Par exemple, pour une montre connectée, la conception nécessite l'utilisation d'une batterie, d'un PCB et d'un display. Les mouvements connus ne sont pas adaptés à une intégration simple dans cet environnement : finesse insuffisante, pas de fixation sur PCB, platines laiton encombrantes.

Le document EP 2813904 A1 au nom de ETA SA MANUFACTURE HORLOGERE SUISSE décrit un mouvement horloger électronique équipé d'un moteur comprenant un stator et un rotor à aimant permanent situé dans un trou du stator, ce stator définissant au moins deux pôles magnétiques comprenant respectivement au moins deux épanouissements polaires s'étendant à la périphérie du trou. Le moteur comprend au moins une bobine montée respectivement autour d'au moins un noyau. Les deux épanouissements polaires et le noyau forment ensemble une première partie en matériau ferromagnétique constituée par ou comprenant une plaquette monolithique formant conjointement les deux épanouissements polaires et le noyau.; Une partie d'extrémité du noyau est reliée à au moins un épanouissement polaire correspondant par une deuxième partie, définissant une plaque de base ou une platine en matériau magnétique, à laquelle la première partie est fixée et sur laquelle sont montés au moins partiellement des éléments du mouvement horloger électronique.

Le document FR 2518775 A1 au nom de JUNGHANS décrit un mécanisme d'horlogerie comportant une plaquette de circuits imprimés de commande du mouvement, et une plaque de support retenant la plaquette de circuits imprimés, pour un transducteur électromécanique devant entraîner un rouage de mise en mouvement d'une cadrature, introduites dans un boîtier à deux coquilles, la cadrature étant placée, du côté de la coquille antérieure, devant la plaque de support, tandis que le rouage est fixé, du côté de la coquille postérieure, derrière la plaque de support sur celle-ci, jusqu'à la petite moyenne traversant la plaque de support avec son pignon et pénétrant dans la cadrature, et la plaquette de semi-conducteurs est fixée à la plaque de support de conformation sensiblement plane à une faible distance de celle-ci, et lui est reliée par des broches qui sont soudées au placage de la plaquette de semi-conducteurs destiné aux bandes-conductrices et ancrées en tant que broches de connexion de bobinage dans un noyau d'enroulement du stator, qui est supporté par un empilement de stator du moteur pas à pas, positionné dans la zone de son ouverture de rotor par concordance de forme derrière la plaque de support en reposant à plat sur elle, la plaquette de semi-conducteurs embrassant suivant un arc la zone occupée devant-la plaque de support par la grande moyenne (roue des minutes) et la roue des heures de la cadrature et portant, devant la paroi postérieure du boîtier, à côté et/ou au-dessous des roues du rouage, les composants du montage électronique de commande du mouvement.

### Résumé de l'invention

Il s'agit donc de mettre au point une nouvelle architecture de mouvement, capable d'une épaisseur minimale, idéalement réduite à l'épaisseur des bobines qui constituent en général les composants les plus volumineux des moteurs, cette architecture devant autoriser la commande et l'affichage des fonctions les plus simples comme les plus complexes.

A cet effet, l'invention concerne un module-moteur selon la revendication 1.

L'invention concerne aussi un groupe de motorisation pour montre selon la revendication 6.

L'invention concerne encore une montre comportant un tel module ou un tel groupe de motorisation.

### Description sommaire des dessins

D'autres caractéristiques et avantages de l'invention apparaîtront à la lecture de la description détaillée qui va suivre, en référence aux dessins annexés, où :
- les figures 1 à 5 représentent, de façon schématisée, et en perspective, les étapes de préparation et de montage d'un moteur en U utilisé dans une variante avantageuse d'un module-moteur selon l'invention ;
- les figures 6 à 9 représentent, de façon schématisée, et en perspective, les étapes de préparation et de montage d'un module-moteur heures/minutes selon l'invention;
- les figures 10 à 12 représentent, de façon schématisée, et en perspective, les étapes de préparation et de montage d'un module-moteur secondes selon l'invention ;
- les figures 13 et 14 représentent, de façon schématisée, et en perspective, un module-moteur principal selon l'invention ;
- les figures 15 à 20 représentent, de façon schématisée, et en perspective, un assemblage moteur selon l'invention, avec un module-moteur principal et deux modules-moteur voisins, agencés pour commander le déplacement d'aiguilles indépendantes, non représentées sur les figures;
- la figure 21 illustre, en vue de côté, une réalisation particulière d'ensemble moteur selon l'invention, avec un assemblage moteur rapporté sur une structure, basée sur un flexprint collé à un cadran, cette structure portant des circuits électroniques, et, en vue de face sur la figure 22 où sont visibles des logements de raccordement électrique des modules-moteurs ;
- la figure 23 est une vue de côté similaire à la figure 21, montrant un assemblage moteur auto-portant et directement fixé au cadran ;
- la figure 24 représente, de façon schématisée, et en vue de dessus, un assemblage moteur comportant trois modules-moteur dont un module-moteur principal, et, dans le même plan, un secteur de commande qui porte des moyens d'alimentation et de commande ;
- la figure 25 représente, de façon similaire à la figure 24, un assemblage moteur comportant quatre modules-moteur dont un module-moteur principal, et, dans le même plan, un secteur de commande qui porte des moyens d'alimentation et de commande, et un module passif de renvoi de minuterie ;
- la figure 26 représente, de façon schématisée, et en vue de face, une montre comportant trois aiguilles entraînées par un groupe de motorisation selon l'invention ;
- les figures 27 à 40 représentent, de façon schématisée, et en perspective, différents assemblages fonctionnels réalisés avec des modules-moteurs selon l'invention.

### Description détaillée des modes de réalisation préférés

L'invention concerne un module-moteur 1 pour montre, avec au moins un moteur 4 comportant une bobine 5 et entraînant un rouage 6 comportant un mobile de sortie sur un arbre de sortie 7. Naturellement ce rouage 6 peut être limité au seul mobile de sortie. Les figures illustrent un exemple non limitatif de réalisation, avec des moteurs 4 monophasés bipolaires, comportant une chambre statorique 40 de réception d'un rotor 70 qui entraîne ce rouage 6, non détaillé sur les figures.

Ce module-moteur 1 est inscrit dans un secteur angulaire autour d'un axe de pivotement principal DP, ce secteur angulaire ayant un angle d'ouverture θ par rapport à cet axe de pivotement principal DP.

Selon l'invention, ce module-moteur 1 comporte des connexions principales 8, notamment enfichables, de liaison mécanique ou/et électrique avec une structure 200 ou avec un autre module-moteur 1, et des liaisons planes 11, 12, au moins mécaniques. Ces liaisons planes 11, 12 sont ainsi nommées planes, car elles sont agencées pour coopérer dans une fixation indexée géométriquement, dans un plan perpendiculaire à l'arbre de sortie 7, avec un autre module-moteur 1, de façon à constituer par assemblage un ensemble rigide auto-portant. Naturellement les composants effectuant ces liaisons planes 11, 12, ne sont pas nécessairement plans. Dans une variante avantageuse, ces liaisons planes 11, 12, peuvent encore comporter des liaisons électriques particulières, avec par exemple un circuit de puissance, et un bus de données, pour alimenter et piloter les bobines 5. Chaque bobine 5 est connectée électriquement à deux connexions principales 8, notamment enfichables, ou encore à deux liaisons 11, 12, quand ces liaisons planes 11, 12, sont aussi des liaisons électriques de puissance ou/et de commande.

De préférence, les connexions principales 8 sont des connexions au moins électriques, qui peuvent être du type connexions enfichables dites press-fit, ou ressorts de contact, ou similaires.

Plus particulièrement, ces connexions principales 8 effectuent seulement la liaison électrique.

Le module-moteur 1 décrit ici est conçu plus particulièrement pour une montre, mais on comprend que son agencement est transposable à la motorisation d'un instrument de précision, ou d'un appareil scientifique, ou similaire, de dimensions réduites. Ces applications, accessibles à l'homme du métier à la lecture de la présente description, ne sont pas détaillées ici.

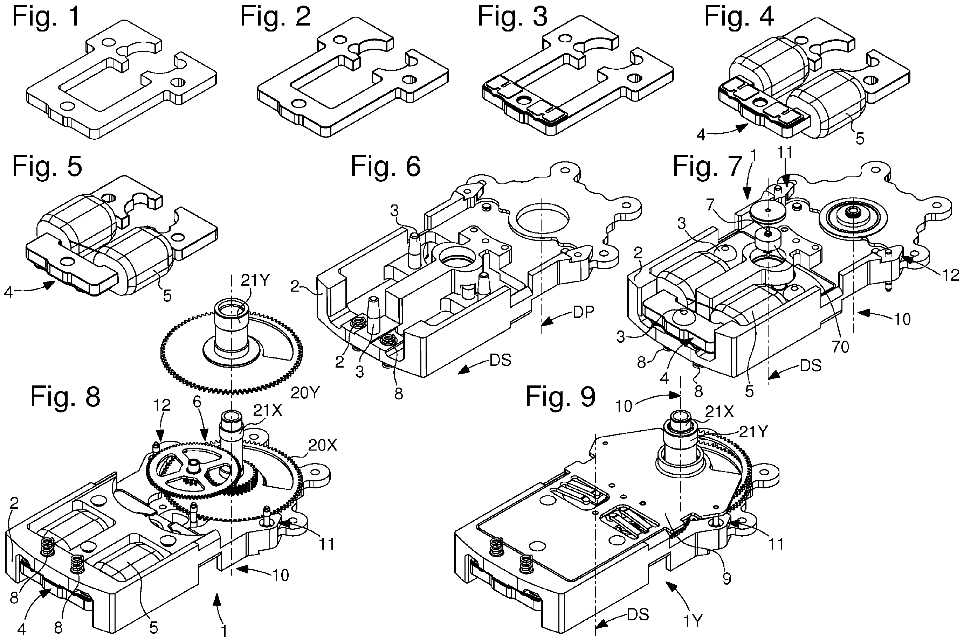

Les figures 1 à 5 illustrent les étapes de préparation et de montage d'un moteur en U utilisé dans une variante avantageuse d'un module-moteur selon l'invention : étampage d'un stator en FeSi ou similaire en figure 1, coating isolant complet en figure 2, collage du circuit bobine en figure 3, bobinage de flyer en figure 4, passage du fil entre les bobines en figure 5.

Dans un exemple non limitatif de réalisation illustré par les figures, le module-moteur 1 comporte une platine 2 comportant des moyens de fixation 3 pour le maintien en position d'au moins un moteur 4. Ce moteur 4 comporte au moins une bobine 5 et est agencé pour entraîner un rouage 6 dont tous les mobiles pivotent autour d'axes parallèles, et ce rouage 6 comporte au moins un arbre secondaire de sortie 7. Cet arbre de sortie 7 définit un axe de pivotement secondaire DS, et, ou bien est agencé pour porter un mobile de sortie pivotant autour de cet axe de pivotement secondaire DS, ou bien comporte directement ce mobile de sortie. Sur cet exemple, le module-moteur 1 comporte, insérées dans la platine 2, des connexions principales 8, notamment de type ressort de contact, ou enfichables, clipables, de liaison mécanique et électrique du module-moteur 1 avec des logements 80 ad hoc d'une structure externe 200 ou avec un autre module-moteur 1. Naturellement, le module-moteur 1 peut comporter, à l'inverse, des logements 80 qui reçoivent des connexions principales 8, notamment enfichables, d'une structure externe 200 ou avec un autre module-moteur 1.

Dans une variante avantageuse, le module-moteur 1 comporte au moins un capteur 600, qui peut notamment constituer des moyens de détection de position des rouages, et en particulier de son propre rouage 6.

Le module-moteur 1 peut, encore, être fixé mécaniquement à une structure 200 ou à un autre module-moteur 1 par adhésif, notamment adhésif double face, vissage, champignons thermoformés, ou autres. Quand la structure 200 est une carte électronique ou un circuit imprimé, communément appelé PCB, les logements 80 sont des vias du PCB, et les connexions principales 8, notamment enfichables, sont avantageusement des éléments élastiquement déformables dits press-fit, ou encore des ressorts de contact. Certaines figures montrent un couvercle 9, notamment sous forme d'un pont thermo-formé, assurant le maintien du mobile de sortie, et qui comporte avantageusement un guidage de l'arbre de sortie 7, ou/et d'arbres du rouage 6.

Les moyens de liaison 11 et des moyens de liaison complémentaire 12, peuvent être réalisés de façon similaire. Une réalisation avantageuse favorisant une insertion des modules-moteurs parallèlement les uns aux autres selon la direction de leurs arbres de sortie 7, consiste en l'utilisation de liaisons élastiques, sous forme de lames flexibles, ou encore de ressorts de compression, ou autres, qui ont l'avantage de cumuler une bonne tenue mécanique, et de permettre une connexion électrique. Une pluralité de telles liaisons élastiques peut être utilisée, de façon à séparer des circuits électriques, par exemple des circuits de puissance et des circuits de commande.

Les moyens de liaison 11 sont agencés pour coopérer en liaison d'accrochage, dans un plan perpendiculaire à l'axe de pivotement secondaire DS, avec des moyens de liaison complémentaire 12 d'un autre module-moteur 1, et les moyens de liaison complémentaire 12 sont agencés pour coopérer en liaison d'accrochage, dans un plan perpendiculaire à l'axe de pivotement secondaire DS, avec des moyens de liaison 11 d'un autre module-moteur 1.

Selon l'invention, pour une occupation maximale de l'espace, et la simplification des rouages, et donc le meilleur rendement, les moyens de liaison 11 et les moyens de liaison complémentaire 12, définissent, pour chaque module-moteur 1, l'angle d'ouverture θ du secteur angulaire s'étendant depuis l'axe de pivotement principal DP, et dans lequel secteur est inscrit ce module-moteur 1.

Les figures 6 à 9 illustrent les étapes de préparation et de montage d'un module-moteur 1Y heures/minutes selon l'invention. La figure 6 montre la préparation d'une platine 2, notamment réalisée par injection, avec des plots d'assemblage 3, et son équipement avec des ressorts de contact 8. La figure 7 montre l'intégration d'un stator monté, correspondant au moteur en U de la figure 5, et sa fixation par thermo-rivetage au niveau des plots 3, et le garnissage avec tube de centre, rondelle, goupilles de pivotement, le rotor 70 sur son axe 7 et un couvercle associé. La figure 8 montre l'assemblage, dans ce cas particulier, d'une roue des minutes 20X avec son tube 21X, d'une roue intermédiaire, et d'une roue des heures 20Y avec son tube 21Y. La figure 9 montre l'obturation par un pont thermo-riveté faisant couvercle 9.

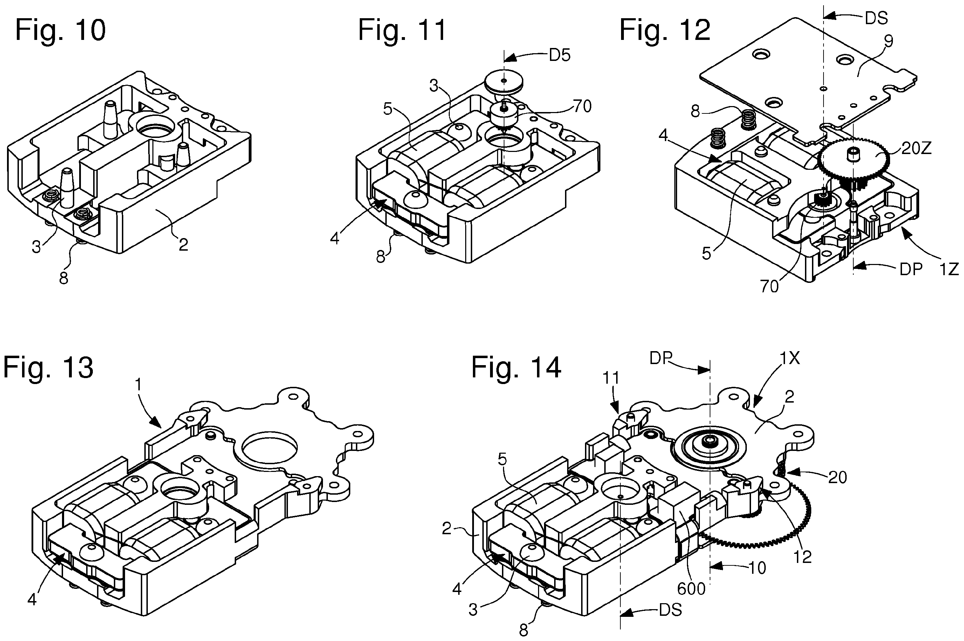

De façon similaire, les figures 10 à 12 illustrent les étapes de préparation et de montage d'un module-moteur secondes 1Z: la préparation de la platine 2 en figure 10, l'intégration d'un stator monté en figure 11, et l'assemblage, d'une roue des secondes 20Z en figure 12, et l'obturation par un pont thermo-riveté faisant couvercle 9.

Les figures 13 et 14 illustrent un module-moteur principal 1X, avec une semelle 2 rallongée, la figure 13 avec le moteur 4 monté et la roue de sortie, et la figure 14 avec un module capteur 600 sur PCB flexible, thermo-riveté sur le moteur.

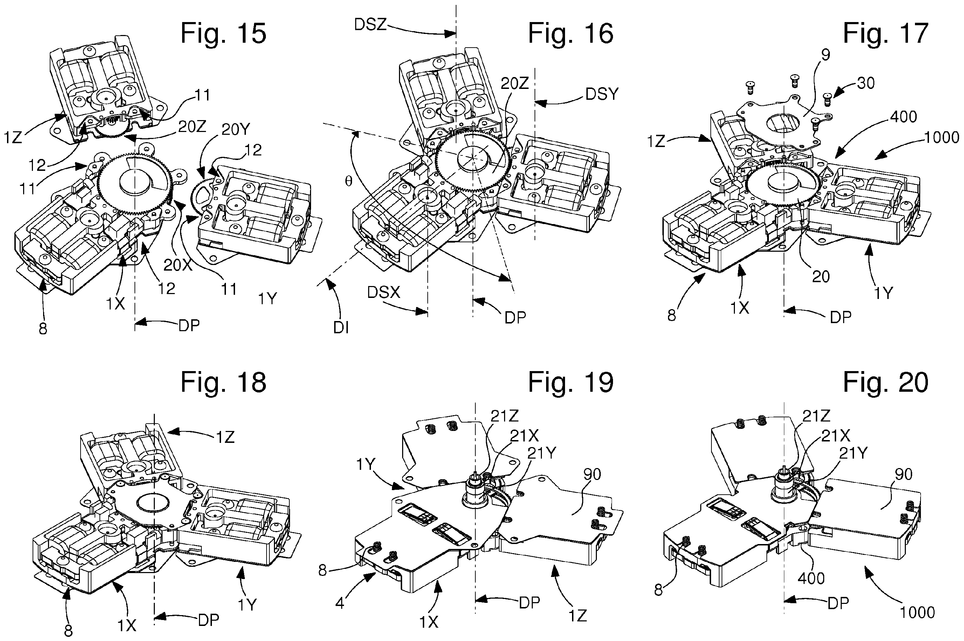

Les figures 15 à 20 illustrent le montage d'un assemblage moteur 400, constitués du module-moteur principal 1X de la figure 14, du module-moteur 1Y heures/minutes, et du module-moteur secondes 1Z de la figure 12 : assemblage des modules-moteurs entre eux en figure 15, par mise en coopération de leurs moyens de liaison 11 et des moyens de liaison complémentaire 12, pose d'une roue de seconde 20Z en figure 16, pose d'une plaque-couvercle 9 de maintien en figure 17, avec chassage de tenons 30, dont le résultat est illustré en figure 18, en figure 19 pose d'un adhésif double-face 90 pour la fixation sur un PCB, et l'assemblage moteur 400 terminé en figure 20.

Les figures 15 à 20, 22, 27, 28 montrent trois modules-moteurs 1 : 1X, 1Y, 1Z, avec un angle d'ouverture de 120°, conçus pour une utilisation à trois aiguilles ou afficheurs.

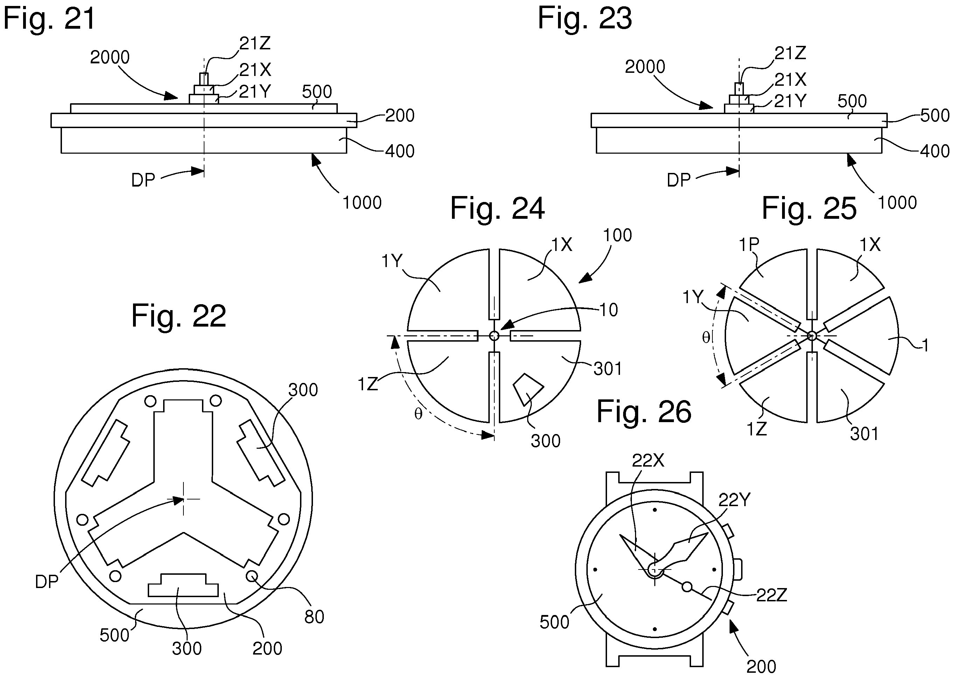

La figure 24 illustre une réalisation avec un angle d'ouverture de 90°, avec trois modules-moteurs 1 : 1X, 1Y, 1Z, assemblés avec un secteur de commande 301 qui porte des moyens d'alimentation et de commande 300.

La figure 25 illustre une réalisation avec un angle d'ouverture de 60°, avec trois modules-moteurs 1 : 1X, 1Y, 1Z, assemblés avec un secteur passif 1P, sans moteur, de même encombrement que les modules-moteurs, et qui ne joue qu'un rôle de renvoi, par exemple pour coupler une roue des minutes avec une roue des heures, ou similaire, encore assemblés avec un secteur de commande 301, et avec un autre module-moteur 1 prédisposé pour un autre affichage.

L'insertion des modules-moteurs 1 les uns par rapport aux autres, pour approcher de l'axe de pivotement principal DP, dépend de la façon dont sont réalisées les liaisons planes 11 et 12. Dans une réalisation particulière, la bissectrice de l'angle d'ouverture θ issue de l'axe de pivotement principal DP est une direction d'insertion DI passant par l'axe de pivotement secondaire DS d'un mobile de sortie. Dans d'autres réalisations particulières, la direction d'insertion DI est oblique par rapport à cette bissectrice. Dans une autre réalisation particulière, deux connexions principales 8, notamment enfichables, définissent, par construction, avec l'axe de pivotement secondaire DS, la direction d'insertion DI.

La figure 14 illustre un module-moteur 1, qui est un module-moteur principal 1X, et qui porte, par exemple au niveau d'une platine 2, un arbre principal 10 qui définit un axe de pivotement principal DP parallèle à l'axe de pivotement secondaire DS de l'arbre de sortie 7 qu'il comporte, et distant de lui.

Tel que visible sur la figure 14, l'arbre principal 10 porte au moins une roue réceptrice 20 folle, qui est agencée pour être entraînée par un mobile de sortie du module-moteur principal 1X.

Plus particulièrement, l'arbre principal 10 porte au moins une roue réceptrice 20 folle particulière agencée pour être entraînée par un mobile de sortie particulier d'un autre module-moteur 1 voisin, 1, 1Y, 1Z, assemblé directement ou indirectement au module-moteur principal 1X par des moyens de liaison 11 et des moyens de liaison complémentaire 12. Par assemblage indirect on considère notamment que ce module-moteur voisin peut ne pas être adjacent au module-moteur principal 1X, mais être séparé de lui par au moins un autre module-moteur 1, ou module de mêmes caractéristiques d'interface : par exemple sur la figure 25 les modules 1Y et 1Z sont séparés du module-moteur principal 1X, d'un premier côté par un secteur passif 1P de renvoi, et d'un autre côté par un secteur de commande 301.

De préférence, l'arbre principal 10 porte une pluralité de roues réceptrices 20, 20X, 20Y, 20Z, folles, coaxiales, indépendantes l'une de l'autre, et chacune agencée pour être entraînée par un mobile de sortie du module-moteur principal 1X ou d'un autre module-moteur 1 voisin assemblé directement ou indirectement au module-moteur principal 1X par des liaisons planes 11, 12.

L'invention concerne encore un groupe de motorisation 1000 pour montre, comportant des moyens d'alimentation et de commande 300, et un tel module-moteur principal 1X, connecté électriquement par des connexions principales 8, notamment enfichables, ou et par des liaisons planes 11, 12, au moins, ou bien au moins à une structure 200 que comporte aussi ce groupe de motorisation 1000 pour former avec lui un ensemble moteur 100, ou bien à au moins un autre module-moteur 1 que comporte ce groupe de motorisation 1000 pour former avec lui un assemblage moteur 400. Plus particulièrement, ce module-moteur principal 1X est connecté électriquement de cette façon, à la fois à une telle structure 200, et à au moins un autre module-moteur 1 que comporte ce groupe de motorisation 1000 pour former avec lui un assemblage moteur 400.

Dans une première variante, le groupe de motorisation 1000 est un tel ensemble moteur 100, comportant une structure 200 et un tel module-moteur principal 1X. Les connexions principales 8, notamment enfichables, de liaison mécanique et électrique du module-moteur principal 1X sont agencées pour coopérer de façon complémentaire avec des logements 80 que comporte la structure 200, dont certains de ces logements 80 sont connectés électriquement à des moyens d'alimentation et de commande 300, que comporte la structure 200 ou qui sont eux-mêmes connectés électriquement à la structure 200.

Dans les réalisations à deux ou trois modules, ou davantage, l'ensemble moteur 100 comporte encore au moins un autre module-moteur 1:1Y, 1Z, voisin du module-moteur principal 1X, assemblé directement ou indirectement au module-moteur principal 1X par des liaisons planes 11, 12.

Par convention on dénomme ici les modules-moteur 1, autres que le module-moteur principal 1X, des modules voisins, notamment les modules 1Y et 1Z représentés sur les figures.

Et cet autre module-moteur voisin 1Y, 1Z porte un mobile de sortie particulier engrenant avec une roue folle 20, 20Y, 20Z, particulière enfilée sur l'arbre principal 10 du module-moteur principal 1X. Et des connexions principales 8, notamment enfichables, de liaison mécanique et électrique, que comporte chaque autre module-moteur voisin, sont agencées pour coopérer de façon complémentaire avec des logements 80 appropriés de la structure 200. On peut bien sûr fixer un seul module à la structure, notamment au PCB, et fixer les autres modules sur celui-ci, ou bien fixer d'abord ces différents modules entre eux, et fixer l'ensemble ainsi constitué sur la structure ou le PCB, notamment par adhésif double face ou similaire.

Dans une deuxième variante, le groupe de motorisation 1000 est un tel assemblage moteur 400, comportant un tel module-moteur principal 1X, et au moins un autre module-moteur voisin 1Y, 1Z , assemblé et connecté électriquement, directement ou indirectement, au module-moteur principal 1X par des liaisons planes 11, 12. Et cet autre module-moteur voisin 1Y, 1Z porte un mobile de sortie particulier engrenant avec une roue folle 20, 20Y, 20Z, particulière enfilée sur l'arbre principal 10 du module-moteur principal 1X.

Plus particulièrement, dans une réalisation avantageuse, cet assemblage moteur 400 constitue une structure auto-portante. Ainsi, la précision nécessaire pour les rouages est garantie par l'assemblage moteur 400 lui-même et par les modules qui le constituent.

Dans une variante particulière, chaque module-moteur 1 que comporte le groupe de motorisation 1000 est un module-moteur 1 inscrit dans un secteur, tel qu'exposé plus haut, et les angles d'ouverture θ de ces modules-moteur 1, qui sont égaux entre eux, ont une valeur angulaire qui est un sous-multiple entier de 360°, et les liaisons planes 11, 12 de ces modules-moteur 1 sont agencées pour une liaison circulaire des modules-moteur 1 autour de l'arbre principal 10.

Dans une réalisation avantageuse, les liaisons planes 11, 12, entre ces modules-moteur 1 sont agencées pour une liaison à la fois mécanique et électrique entre ces modules-moteur 1.

De façon particulière et avantageuse, l'arbre principal 10 porte une pluralité de roues réceptrices 20 : 20X, 20Y, 20Z, qui sont folles, indépendantes l'une de l'autre, et chacune agencée pour être entraînée par un mobile de sortie du module-moteur principal 1X ou d'un autre module-moteur voisin 1Y, 1Z. Et chaque dite roue réceptrice 20 : 20X, 20Y, 20Z, porte un tube 21, 21X, 21Y, 21Z, de réception d'un afficheur, tel qu'une aiguille, non représenté sur les figures. Et tous les tubes 21 : 21X, 21Y, 21Z, que portent respectivement les roues réceptrices 20 : 20X, 20Y, 20Z, enfilés sur l'arbre principal 10, sont coaxiaux et intérieurs l'un à l'autre. Le module-moteur principal 1X comporte un mobile de sortie principal, dont la denture est positionnée axialement à une hauteur propre à engrener avec une roue réceptrice principale 20X située à la même hauteur sur l'arbre principal 10. Et chaque dite roue réceptrice 20 : 20Y, 20Z autre que la roue réceptrice principale 20X est positionnée sur l'arbre principal 10 à une hauteur particulière à laquelle elle peut engrener avec un mobile de sortie particulier et correspondant, que comporte, à la même hauteur, un autre module-moteur 1 : 1Y, 1Z voisin.

Dans une réalisation particulière, tel que visible sur la figure 25, l'ensemble moteur 100 comporte au moins un secteur passif 1P, qui possède le même encombrement, et qui a les mêmes géométrie, rouage, mobile de sortie, connexions enfichables et liaisons planes, que les modules-moteurs 1 : 1X, 1Y, 1Z voisins de lui. Mais ce secteur passif 1P est dépourvu de moteur 4. Ce module passif 1P comporte une roue d'entrée entraînée par une roue réceptrice 20 : 20X du module-moteur principal 1X, ou 20Y, 20Z d'un autre module-moteur 1 : 1Y, 1Z voisin, cette roue d'entrée étant agencée pour entraîner le mobile de sortie du mobile passif 1P, au travers de son rouage dont chaque mobile est fou.

Dans une réalisation particulière, les moyens d'alimentation et de commande 300 sont agencés pour commander au moins un module-moteur 1 avec un signal temporel, de façon à effectuer un affichage d'une grandeur temporelle avec l'afficheur correspondant du module-moteur 1 considéré.

Dans une réalisation particulière, les moyens d'alimentation et de commande 300 sont agencés pour commander une pluralité de modules-moteur 1 : 1X, 1Y, 1Z, avec différents signaux temporels, de façon à effectuer un affichage d'une grandeur temporelle différente sur chacun des afficheurs des modules-moteur 1 : 1X, 1Y, 1Z considérés.

De préférence, chaque roue réceptrice 20, 20X, 20Y, 20Z, porte un tube 21, 21X, 21Y, 21Z, de réception d'un afficheur.

De préférence, tous les tubes 21 : 21X, 21Y, 21Z, que portent les roues réceptrices 20 : 20X, 20Y, 20Z, enfilées sur le même arbre principal 10, quand le module-moteur principal 1X porte plus d'une roue réceptrice 20, sont coaxiaux et intérieurs l'un à l'autre.

La hauteur des roues réceptrices 20, 20X, 20Y, 20Z est agencée pour correspondre à la hauteur respective des mobiles de sortie des modules-moteurs 1 qui coopèrent autour du même arbre principal 10. Ainsi, notamment le module-moteur principal 1X comporte un mobile de sortie principal, dont la denture est positionnée axialement à une hauteur propre à engrener avec une roue réceptrice principale 20X située à la même hauteur sur l'arbre principal 10. Et chaque roue réceptrice 20, 20Y, 20Z, autre que la roue réceptrice principale 20X, est positionnée sur l'arbre principal 10 à une hauteur particulière à laquelle elle peut engrener avec un mobile de sortie particulier que comporte, à la même hauteur, un autre module-moteur voisin 1Y, 1Z, assemblé directement ou indirectement au module-moteur principal 1X par des moyens de liaison 11 et les moyens de liaison complémentaire 12.

L'invention comporte encore un ensemble moteur 100, comportant une structure 200 et au moins un module-moteur principal 1X. Les connexions principales 8, notamment enfichables, de liaison mécanique et électrique de ce module-moteur 1 sont agencées pour coopérer de façon complémentaire avec des logements 80 que comporte la structure 200, dont certains sont connectés électriquement à des moyens d'alimentation et de commande 300 que comporte la structure 200, ou qui sont eux-mêmes connectés électriquement à la structure 200.

De préférence, cet ensemble moteur 100 comporte encore au moins un autre module-moteur 1 voisin : 1Y. 1Z, assemblé directement ou indirectement au module-moteur principal 1X par des moyens de liaison 11 et des moyens de liaison complémentaire 12, et cet autre module-moteur 1 voisin porte un mobile de sortie particulier engrenant avec une roue folle 20 particulière enfilée sur l'arbre principal 10 du module-moteur principal 1X.

Dans une réalisation particulière de cet ensemble moteur 100, les connexions principales 8, notamment enfichables, de liaison mécanique et électrique que comporte chaque autre module-moteur 1 voisin, sont agencées pour coopérer de façon complémentaire avec des logements 80 de la structure 200,.

Dans une réalisation particulière de l'ensemble moteur 100, chaque module-moteur 1 qu'il comporte est inscrit dans un secteur, et les angles d'ouverture θ de ces modules-moteur 1 sont égaux entre eux, avec une valeur angulaire qui est un sous-multiple entier de 360°.

Toutefois, un assemblage peut très bien comporter des modules qui ont des angles d'ouverture différents entre eux, et peut aussi couvrir un angle inférieure à 360°, même si un assemblage sur 360°, même réalisé avec un ou plusieurs modules factices chacun limité à une platine 2, est plus avantageux en termes de rigidité de l'ensemble de cet assemblage.

Dans une réalisation particulière de l'ensemble moteur 100, les moyens de liaison 11 et les moyens de liaison complémentaire 12 des modules-moteur 1 qu'il comporte sont agencés pour une liaison circulaire des modules-moteur 1 autour de l'arbre principal 10.

Dans une réalisation particulière de l'ensemble moteur 100, les moyens de liaison 11 et les moyens de liaison complémentaire 12 des modules-moteur 1 sont agencés pour une liaison à la fois mécanique et électrique entre les modules-moteur 1.

Dans une réalisation particulière de l'ensemble moteur 100, l'arbre principal 10 porte une pluralité de roues réceptrices 20 folles, indépendantes l'une de l'autre, et chacune agencée pour être entraînée par un mobile de sortie du module-moteur principal 1X ou d'un autre module-moteur 1 voisin. Chaque roue réceptrice 20 porte un tube 21 de réception d'un afficheur. Tous les tubes 21 que portent les roues réceptrices 20, enfilées sur l'arbre principal 10, quand le module-moteur principal 1X porte plus d'une dite roue réceptrice 20, sont coaxiaux et intérieurs l'un à l'autre. Le module-moteur principal 1X comporte un mobile de sortie principal dont la denture est positionnée axialement à une hauteur propre à engrener avec une roue réceptrice 20 principale située à la même hauteur sur l'arbre principal 10. Et chaque roue réceptrice 20 autre que la roue réceptrice 20 principale est positionnée sur l'arbre principal 10 à une hauteur particulière à laquelle elle peut engrener avec un mobile de sortie particulier que comporte, à la même hauteur, un autre module-moteur 1 voisin.

Dans une réalisation particulière de l'ensemble moteur 100, l'ensemble moteur 100 comporte au moins un module qui est un secteur passif 1P tel que décrit plus haut.

Dans une réalisation particulière de l'ensemble moteur 100, l'ensemble moteur 100 comporte des moyens d'alimentation et de commande 300 raccordés ou intégrés à la structure 200, pour commander au moins un module-moteur 1 avec un signal temporel, de façon à effectuer un affichage d'une grandeur temporelle avec l'afficheur du module-moteur 1 considéré.

Dans une réalisation particulière de l'ensemble moteur 100, les moyens d'alimentation et de commande 300 sont agencés pour commander une pluralité de modules-moteur 1 avec différents signaux temporels, de façon à effectuer un affichage d'une grandeur temporelle différente sur chacun des afficheurs des modules-moteur 1 considérés.

Dans une réalisation particulière, la structure 200 est sensiblement annulaire, et entoure au moins partiellement les modules-moteur 1.

Dans une réalisation particulière, compatible avec la précédente, la structure 200 comporte au moins une partie réalisée sous forme d'un secteur de même encombrement géométrique, en projection plane perpendiculairement aux axes des mobiles, et comporte des liaisons planes 11, 12, pour sa liaison aux modules-moteur 1.

L'invention concerne encore un assemblage moteur 400, comportant un module-moteur principal 1X, et au moins un autre module-moteur 1 voisin, assemblé directement ou indirectement au module-moteur principal 1X par des moyens de liaison 11 et des moyens de liaison complémentaire 12, et cet autre module-moteur 1 voisin portant un mobile de sortie particulier engrenant avec une roue folle 20 particulière enfilée sur l'arbre principal 10 du module-moteur principal 1X.

Toutes les caractéristiques particulières des modules-moteurs constitutifs sont applicables à cet assemblage moteur 400, qui présente l'avantage d'être auto-portant, et ne nécessite pas de platine ou de structure porteuse.

Dans la pratique il est généralement plus facile, d'assembler les unes avec les autres les platines 2 des différents modules 1 que comporte un assemblage, avant le montage ultérieur des rouages au centre, ce qui évite tout problème d'engrènement des rouages. Les couvercles 9 éventuels des modules sont ensuite montés et enferment les rouages et leurs arbres de pivotement.

Dans une application particulièrement avantageuse, l'invention permet ainsi de réaliser un moteur à trois aiguilles modulaire, où le module-moteur principal 1X des minutes entraîne par exemple la roue réceptrice principale 20X des minutes (ou bien la roue des heures dans une variante). Les modules 1Y des heures et 1Z des secondes comportent simplement les rouages 6Y et 6Z comportant les roues de sortie venant s'engrener respectivement sur les roues réceptrices 20Y des heures et 20Z des secondes montées folles sur l'arbre principal du module-moteur principal 1X. Chaque module-moteur 1 comporte un moteur 4, ici en forme de U, notamment bobiné par flyer. Une structure classique de moteur Lavet est également compatible avec l'architecture de l'invention. Le bobinage est réparti de chaque côté, mais on a bien, dans l'exemple des figures, une seule bobine 5, et donc un moteur 4 monophasé dans cette réalisation particulière. Les connexions principales 8, notamment enfichables, sont des press fits connectés à la bobine 5, et par exemple insérés dans une platine 2 en matière plastique. Les modules1X, 1Y, 1Z, peuvent avantageusement être réalisés dans le même moule d'injection, un simple insert correspondant à la protubérance qui porte l'arbre principal 10 suffisant à différencier le module-moteur principal 1X des autres. Ici, les modules 1X, 1Y, 1Z, sont directement monté sur un PCB constituant une structure 200, à l'aide des press-fits. Les press-fits relatifs à la commande et à l'alimentation de chaque bobine 5 sont insérés dans des vias (c'est-à-dire des trous métallisés) afin de les connecter électriquement. D'autres press-fits ou connecteurs similaires, sans nécessité de connexion électrique, utiles pour l'agencement géométrique ou/et la rigidité de l'ensemble, sont insérés dans des trous du PCB ou des vias non connectés électriquement, pour assurer uniquement des fonctions mécaniques.

Les liaisons mécaniques inter-modules permettent avantageusement de centrer et aligner un module par rapport à un autre, et de maintenir la fixation dans la position géométrique correcte. On peut, à cette fin, utiliser des goupilles avec un thermo-formage.

Dans cet exemple, pour afficher une aiguille, on utilise le module-moteur principal 1X seul. Pour afficher deux aiguilles indépendantes, on utilise le module-moteur principal 1X et l'un des autres modules-moteur voisins 1Y ou 1Z, assemblés l'un à l'autre par des liaisons planes 11, 12. L'ensemble est monté sur le PCB de la même façon que le module-moteur principal 1X, par insertion des press-fits. Pour afficher trois aiguilles 22X, 22Y, 22Z indépendantes, on procède de la même façon que pour deux aiguilles, en utilisant les deux autres modules-moteur voisins 1Y et 1Z.

Pour réduire les coûts, on peut utiliser un module passif 1D, qui ne comporte qu'une minuterie permettant de lier par exemple la roue réceptrice des heures 20Y, et la roue principale 20X des minutes du module-moteur principal 1X. Ainsi on réalise à peu de frais un module-moteur à deux aiguilles liées. L'adjonction d'un troisième module-moteur 1 permet, par exemple, d'avoir une petite seconde indépendante. La fixation du moteur 4 peut se faire directement par chassage sur un PCB standard. Il n'y a aucune nécessité d'avoir une platine, ce qui est un avantage pour une application non horlogère.

L'assemblage par press-fit permet d'éviter de devoir souder le moteur, un passage au reflow n'étant pas possible pour un module-moteur, en raison de la température élevée non compatible. Avantageusement, la fixation press-fit comporte la connexion électrique pour les bobines, et éventuellement un module DPR capacitif.

Ainsi, avec trois modules 1X, 1Y, et 1Z, quasi identiques (et donc de coûts réduits), on peut réaliser toute une palette de mouvements: une aiguille, deux aiguilles liées, deux aiguilles indépendantes, trois aiguilles indépendantes, deux aiguilles liées et une aiguille indépendante.

Le fait de pouvoir éventuellement se passer du PCB est un avantage en termes d'épaisseur de mouvement. Le PCB peut aussi constituer seulement un des secteurs de l'assemblage.

Les liaisons planes 11, 12, peuvent avantageusement être réalisées sous la forme de contacts électriques par ressorts de compression venant en appui sur un module-moteur 1 ou un PCB. Un module-moteur 1 peut être fixé mécaniquement à un autre module-moteur 1 ou à un PCB par adhésif, ou vissage, ou champignons thermoformés par exemple, ou autre.

Les figures illustrent l'utilisation d'un circuit souple dit flexprint, qui apporte comme avantages sa finesse et la possibilité de pliages dans des zones latérales aux modules-moteur 1, et ne se rajoute pas à l'épaisseur totale. Les figures 21 et 22 montrent un tel flexprint, qui constitue alors une structure 200 particulière, collé à un cadran 500 ; on peut également coller un tel flexprint sur un afficheur ou display. La figure 20 montre un module-moteur principal 1X préassemblé, collé au flexprint, notamment avec un adhésif double face, ou bien vissé au flexprint, ou encore fixé par thermo-déformation ou similaire, et avec des connexions électriques par ressort. Les composants électriques ou électroniques peuvent être disposés latéralement par rapport au module-moteur, ce qui offre une épaisseur totale avantageuse, quasiment limitée à l'épaisseur de la bobine 5.

Le cas où des composants électriques ou électroniques sont disposés à la fois latéralement et en-dessous par rapport aux modules-moteurs offre un nombre de fonctions supérieur, mais avec une épaisseur un peu plus importante.

L'invention concerne encore une montre 2000 comportant au moins un tel module-moteur 1, ou un tel groupe de motorisation 1000, ou ensemble moteur 100, ou assemblage moteur 400.

Avantageusement, la structure 200 comporte le cadran 500 de la montre 2000, ou est constituée par ce cadran 500.

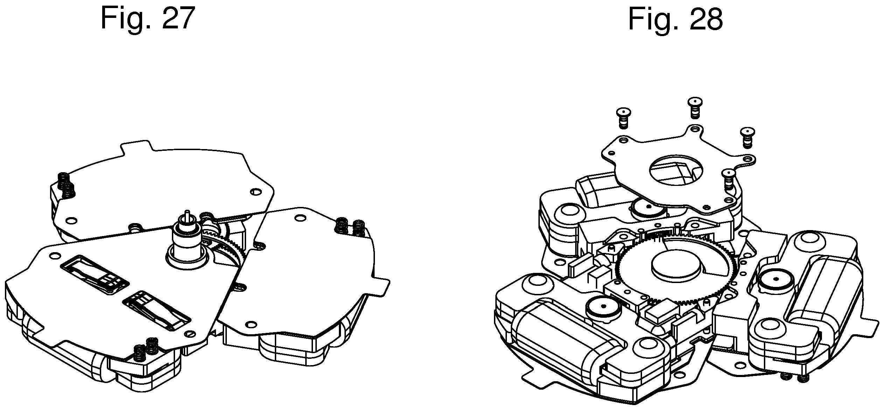

Les figures 27 à 40 illustrent différents assemblages fonctionnels réalisés avec des modules-moteurs selon l'invention.

Les figures 27 et 28 illustrent, fermée et découverte, une configuration en Y à trois aiguilles indépendantes, une aiguille pilotée par chacun de trois modules agencés à 120°.

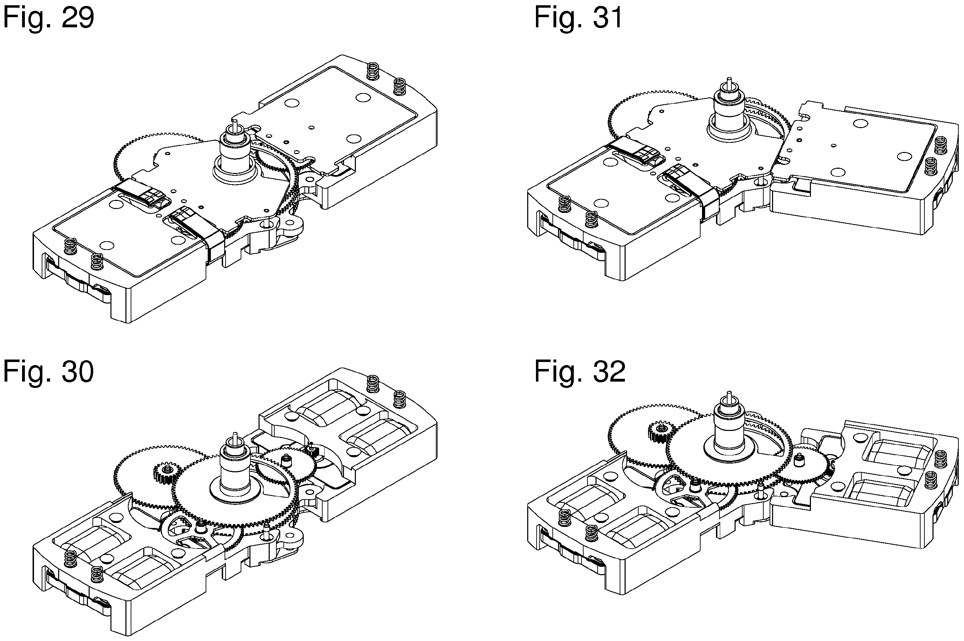

Les figures 29 et 30 illustrent, fermée et découverte, une configuration droite à deux aiguilles liées sur un premier module, et une seconde indépendante sur un deuxième module agencé à 180° du premier.

Les figures 31 et 32 illustrent, fermée et découverte, une configuration en V à deux aiguilles liées sur un premier module, et une seconde indépendante sur un deuxième module agencé à 120° du premier.

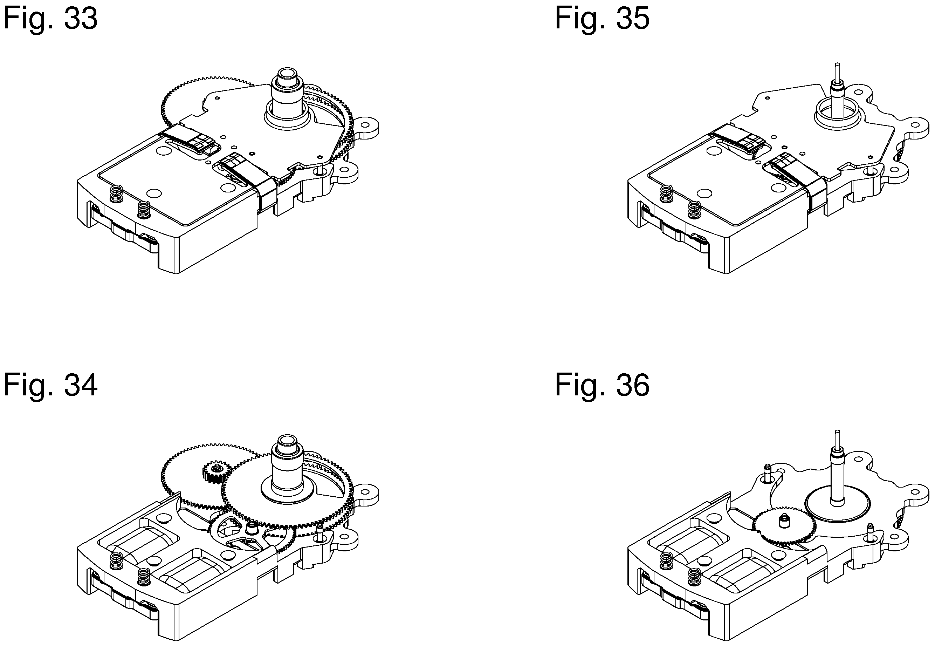

Les figures 33 et 34 illustrent, fermée et découverte, une configuration à un seul module à deux aiguilles liées.

Les figures 35 et 36 illustrent, fermée et découverte, une configuration à un seul module à une aiguille de seconde indépendante.

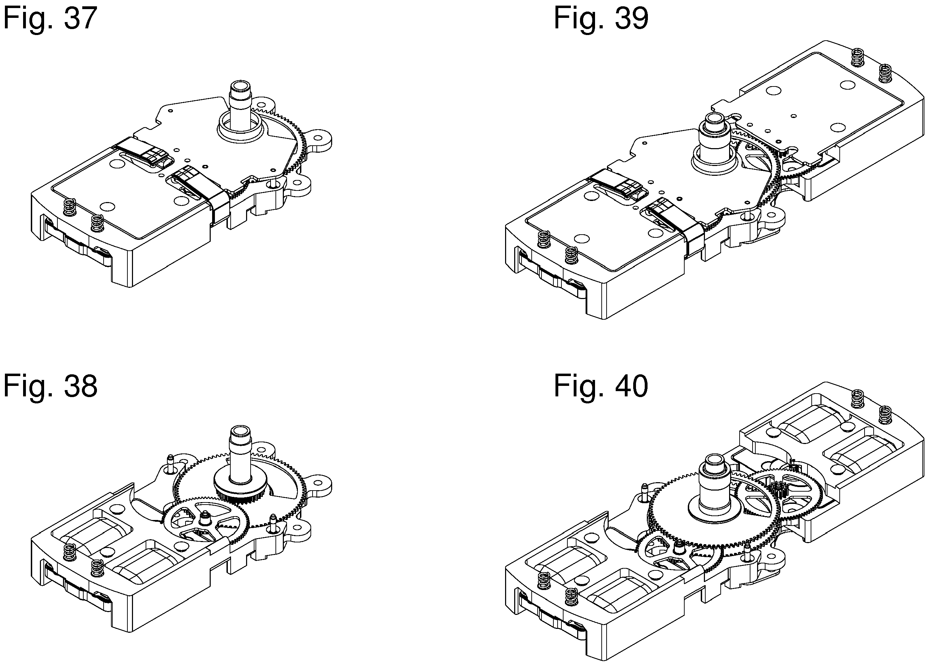

Les figures 37 et 38 illustrent, fermée et découverte, une configuration à un seul module à une aiguille de minute indépendante.

Les figures 39 et 40 illustrent, fermée et découverte, une configuration droite à deux aiguilles indépendantes, ici d'heure et de minute, chacune sur un module agencé à 180° de l'autre.

L'invention est, ainsi, utilisable aussi bien pour réaliser des affichages complets au centre, dépendants ou indépendants, que pour adopter une configuration de type régulateur avec des affichages éclatés en différentes zones de la montre, ou encore avec une petite seconde déportée, ou autre.

## Revendications

1. Module-moteur (1) pour montre, inscrit dans un secteur angulaire autour d'un axe de pivotement principal (DP), ledit secteur angulaire ayant un angle d'ouverture (θ) par rapport audit axe de pivotement principal (DP), ledit module-moteur (1) comportant au moins un moteur (4) comportant une bobine (5) et entraînant un rouage (6) dont tous les mobiles pivotent autour d'axes parallèles, ledit rouage (6) comportant au moins un arbre secondaire de sortie (7) qui définit un axe de pivotement secondaire (DS) parallèle audit axe principal (DP), et lequel arbre secondaire de sortie (7), ou bien est agencé pour porter un mobile de sortie pivotant autour dudit axe de pivotement secondaire (DS), ou bien comporte directement un tel mobile de sortie, ledit module-moteur (1) comportant des connexions principales (8) de liaison au moins électrique avec une structure (200) ou avec un autre module-moteur (1), et des liaisons planes (11, 12) au moins mécaniques agencées pour coopérer dans une fixation indexée géométriquement, dans un plan perpendiculaire audit arbre de sortie (7), avec un autre module-moteur (1) de même type, chaque dite bobine (5) étant connectée électriquement à deux dites liaisons planes (11, 12) quand lesdites liaisons planes (11, 12) sont aussi des liaisons électriques de puissance ou/et de commande, lesdites liaisons planes (11, 12) comportant des moyens de liaison (11) et des moyens de liaison complémentaire (12), lesdits moyens de liaison (11) étant agencés pour coopérer en liaison d'accrochage, dans un plan perpendiculaire audit arbre de sortie (7), avec des dits moyens de liaison complémentaire (12) d'un autre module-moteur (1), et lesdits moyens de liaison complémentaire (12) étant agencés pour coopérer en liaison d'accrochage, dans un plan perpendiculaire audit axe de pivotement secondaire (DS), avec des dits moyens de liaison (11) d'un autre module-moteur (1), et où lesdits moyens de liaison (11) et lesdits moyens de liaison complémentaire (12) définissent ledit angle d'ouverture (θ) dudit secteur angulaire, ledit module-moteur (1) étant, ou bien un module-moteur principal (1X) qui porte un arbre principal (10) selon ledit axe de pivotement principal (DP), parallèle audit arbre de sortie (7), et distant dudit arbre de sortie (7), ou bien un module-moteur voisin (1Y, 1Z), assemblé directement ou indirectement à un tel module-moteur principal (1X).

2. Module-moteur (1) selon la revendication 1, **caractérisé en ce que** ledit module-moteur (1) est un dit module-moteur principal (1X) dont ledit arbre principal (10) porte au moins une roue réceptrice (20) folle agencée pour être entraînée par un dit mobile de sortie dudit module-moteur principal (1X).

3. Module-moteur (1) selon la revendication 2, **caractérisé en ce que** ladite roue réceptrice (20) folle est agencée pour être entraînée par un dit mobile de sortie d'un autre module-moteur (1) adjacent assemblé, directement ou indirectement, audit module-moteur principal (1X) par des dites liaisons planes (11, 12).

4. Module-moteur (1) selon la revendication 3, **caractérisé en ce que** ledit arbre principal (10) porte une pluralité de roues réceptrices (20, 20X, 20Y, 20Z) folles, indépendantes l'une de l'autre, chacune portant un tube (21, 21X, 21Y, 21Z) de réception d'un afficheur, et chacune agencée pour être entraînée par un dit mobile de sortie dudit module-moteur principal (1X) ou d'un autre module-moteur voisin (1Y, 1Z) adjacent assemblé directement ou indirectement audit module-moteur principal (1X) par des dites liaisons planes (11, 12), et **en ce que** tous lesdits tubes (21, 21X, 21Y, 21Z) que portent lesdites roues réceptrices (20, 20X, 20Y, 20Z), enfilées sur le même dit arbre principal (10), sont coaxiaux et intérieurs l'un à l'autre.

5. Module-moteur (1) selon la revendication 4, **caractérisé en ce que** ledit module-moteur principal (1X) comporte un dit mobile de sortie qui est un mobile de sortie principal, dont la denture est positionnée axialement à une hauteur propre à engrener avec une dite roue réceptrice (20) qui est une roue réceptrice principale (20X) et qui est située à la même hauteur que ledit mobile de sortie principal sur ledit arbre principal (10), et **en ce que** chaque dite roue réceptrice (20, 20Y, 20Z) autre que ladite roue réceptrice principale (20X) est positionnée sur ledit arbre principal (10) à une hauteur à laquelle elle peut engrener avec un dit mobile de sortie que comporte, à la même hauteur, un autre module-moteur (1Y, 1Z) adjacent assemblé, directement ou indirectement, audit module-moteur principal (1X) par des dites liaisons planes (11, 12).

6. Groupe de motorisation (1000) pour montre, comportant des moyens d'alimentation et de commande (300), **caractérisé en ce que** ledit groupe de motorisation (1000) comporte un dit module-moteur (1) selon l'une des revendications 1 à 5 et qui est un dit module-moteur principal (1X), connecté électriquement par des dites connexions principales (8) ou/et par desdites liaisons planes (11, 12), au moins, ou bien au moins à une structure (200) que comporte aussi ledit groupe de motorisation (1000) pour former avec lui un ensemble moteur (100), ou bien à au moins un autre module-moteur voisin (1Y, 1Z) que comporte ledit groupe de motorisation (1000) pour former avec lui un assemblage moteur (400).

7. Groupe de motorisation (1000) selon la revendication 6, **caractérisé en ce que** ledit groupe de motorisation (1000) est un dit ensemble moteur (100) comportant une structure (200) et un dit module-moteur principal (1X), et **en ce que** des dites connexions principales (8) de liaison mécanique et électrique dudit module-moteur principal (1X) sont agencées pour coopérer de façon complémentaire avec des logements (80) que comporte ladite structure (200), dont certains dits logements (80) sont connectés électriquement à des moyens d'alimentation et de commande (300) que comporte ladite structure (200) ou qui sont eux-mêmes connectés électriquement à ladite structure (200).

8. Groupe de motorisation (1000) selon la revendication 7, **caractérisé en ce que** ledit ensemble moteur (100) comporte encore au moins un autre module-moteur voisin (1Y, 1Z) adjacent assemblé directement ou indirectement audit module-moteur principal (1X) par des dites liaisons planes (11, 12) et ledit autre module-moteur voisin (1Y, 1Z) adjacent portant un dit mobile de sortie engrenant avec une roue folle (20, 20Y, 20Z) enfilée sur ledit arbre principal (10) dudit module-moteur principal (1X), et **en ce que** des dites connexions principales (8), de liaison mécanique et électrique que comporte chaque dit autre module-moteur voisin (1Y, 1Z), sont agencées pour coopérer de façon complémentaire avec des dits logements (80) de ladite structure (200).

9. Groupe de motorisation (1000) selon la revendication 6, **caractérisé en ce que** ledit groupe de motorisation (1000) est un dit assemblage moteur (400) comportant un dit module-moteur principal (1X), et au moins un autre module-moteur voisin (1Y, 1Z), assemblé et connecté électriquement, directement ou indirectement, audit module-moteur principal (1X) par des dites liaisons planes (11, 12), et ledit autre module-moteur voisin (1Y, 1Z) adjacent portant un dit mobile de sortie engrenant avec une roue folle (20, 20Y, 20Z) enfilée sur ledit arbre principal (10) dudit module-moteur principal (1X).

10. Groupe de motorisation (1000) selon la revendication 9, **caractérisé en ce que** ledit assemblage moteur (400) constitue une structure auto-portante.

11. Groupe de motorisation (1000) selon l'une des revendications 6 à 10, **caractérisé en ce que** chaque dit module-moteur (1X, 1Y, 1Z) que comporte ledit groupe de motorisation (1000) est un module-moteur (1) selon la revendication 1, **en ce que** lesdits angles d'ouverture (θ) desdits modules-moteur (1X, 1Y, 1Z) que comporte ledit groupe de motorisation (1000), qui sont égaux entre eux, ont une valeur angulaire qui est un sous-multiple entier de 360°, et **en ce que** lesdites liaisons planes (11, 12) desdits modules-moteur (1X, 1Y, 1Z) sont agencées pour une liaison circulaire desdits modules-moteur (1X, 1Y, 1Z) autour dudit arbre principal (10).

12. Groupe de motorisation (1000) selon l'une des revendications 6 à 11, **caractérisé en ce que** lesdites liaisons planes (11, 12) desdits modules-moteur (1X, 1Y, 1Z) que comporte ledit groupe de motorisation (1000) sont agencées pour une liaison mécanique et électrique entre lesdits modules-moteur (1).

13. Groupe de motorisation (1000) selon l'une des revendications 6 à 12, **caractérisé en ce que** ledit arbre principal (10) porte une pluralité de roues réceptrices (20, 20X, 20Y, 20Z) folles, indépendantes l'une de l'autre, et chacune agencée pour être entraînée par un dit mobile de sortie dudit module-moteur principal (1X) ou d'un autre module-moteur voisin (1Y, 1Z), **en ce que** chaque dite roue réceptrice (20, 20X, 20Y, 20Z) porte un tube (21, 21X, 21Y, 21Z) de réception d'un afficheur, **en ce que** tous lesdits tubes (21, 21X, 21Y, 21Z) que portent lesdites roues réceptrices (20), enfilées sur ledit arbre principal (10, sont coaxiaux et intérieurs l'un à l'autre, **en ce que** ledit module-moteur principal (1X) comporte un dit mobile de sortie principal dont la denture est positionnée axialement à une hauteur propre à engrener avec une dite roue réceptrice principale (20X) située à la même hauteur sur ledit arbre principal (10), et **en ce que** chaque dite roue réceptrice (20, 20Y, 20Z) autre que ladite roue réceptrice principale (20X) est positionnée sur ledit arbre principal (10) à une hauteur à laquelle elle peut engrener avec un dit mobile de sortie que comporte, à la même hauteur, un autre module-moteur voisin (1Y, 1Z).

14. Groupe de motorisation (1000) selon l'une des revendications 6 à 13, **caractérisé en ce que** ledit ensemble moteur (100) comporte au moins un secteur passif (1P) de mêmes géométrie, rouage, mobile de sortie, connexions enfichables et liaisons planes, que lesdits modules-moteurs (1X, 1Y, 1Z) voisins dudit secteur passif (1), mais qui est dépourvu de dit moteur (4), et qui comporte une roue d'entrée entraînée par une dite roue réceptrice (20) dudit module-moteur principal (1X) ou d'un dit module-moteur voisin (1Y, 1Z), ladite roue d'entrée étant agencée pour entraîner ledit mobile de sortie dudit mobile passif (1P) au travers de son dit rouage dont chaque mobile est fou.

15. Groupe de motorisation (1000) selon l'une des revendications 6 à 14, **caractérisé en ce que** lesdits moyens d'alimentation et de commande (300) sont agencés pour commander au moins un dit module-moteur (1) selon la revendication 4 avec un signal temporel, de façon à effectuer un affichage d'une grandeur temporelle avec ledit afficheur dudit module-moteur (1) considéré.

16. Groupe de motorisation (1000) selon l'une des revendications 6 à 15, **caractérisé en ce que** lesdits moyens d'alimentation et de commande (300) sont agencés pour commander une pluralité de dits modules-moteur (1X, 1Y, 1Z) selon la revendication 4 avec différents signaux temporels, de façon à effectuer un affichage d'une grandeur temporelle différente sur chacun desdits afficheurs desdits modules-moteur (1X, 1Y, 1Z) considérés.

17. Montre (2000) comportant au moins un module-moteur (1) selon l'une des revendications 1 à 5, ou/et un groupe de motorisation (1000) selon l'une des revendications 6 à 16.

## Patentansprüche

1. Triebmodul (1) für eine Uhr, in einem Winkelbereich um eine Hauptdrehachse (DP) einbeschrieben, wobei der Winkelbereich einen Öffnungswinkel (θ) in Bezug auf die Hauptdrehachse (DP) besitzt, wobei das Triebmodul (1) mindestens eine Triebvorrichtung (4) umfasst, die eine Spule (5) aufweist und ein Räderwerk (6) antreibt, von dem alle Drehteile um parallele Achsen schwenkbar sind, wobei das Räderwerk (6) mindestens eine sekundäre Abtriebswelle (7) umfasst, die eine sekundäre Drehachse (DS) parallel zur Hauptachse (DP) definiert, und wobei die sekundäre Abtriebswelle (7) entweder dafür ausgelegt ist, ein Ausgangsdrehteil zu tragen, das um die sekundäre Drehachse (DS) schwenkt, oder direkt ein solches Ausgangsdrehteil umfasst, wobei das Triebmodul (1) Hauptanschlüsse (8) umfasst für die, mindestens elektrische, Verbindung mit einer Struktur (200) oder mit einem weiteren Triebmodul (1) und für mindestens mechanische, flache Anschlüsse (11, 12), die zum Zusammenwirken in einer geometrisch indexierten Befestigung in einer Ebene senkrecht zur Abtriebswelle (7) mit einem weiteren Triebmodul (1) desselben Typs angeordnet sind, wobei jede Spule (5) mit zwei der flachen Anschlüsse (11, 12) elektrisch verbunden ist, wenn die flachen Anschlüsse (11, 12) außerdem elektrische Leistungs- und/oder Steuerverbindungen sind, wobei die flachen Anschlüsse (11, 12) Verbindungsmittel (11) und komplementäre Verbindungsmittel (12) umfassen, wobei die Verbindungsmittel (11) dafür ausgelegt sind, in einer Verankerungsverbindung in einer Ebene senkrecht zur Abtriebswelle (7) mit den komplementären Verbindungsmitteln (12) eines weiteren Triebmoduls (1) zusammenzuwirken und wobei die komplementären Verbindungsmittel (12) dafür ausgelegt sind, in einer Verankerungsverbindung in einer Ebene senkrecht zu der sekundären Drehachse (DS) mit den Verbindungsmitteln (11) eines weiteren Triebmoduls (1) zusammenzuwirken und wobei die Verbindungsmittel (11) und die komplementären Verbindungsmittel (12) den Öffnungswinkel (θ) des Winkelbereichs definieren, wobei das Triebmodul (1) entweder ein Haupttriebmodul (1X) ist, das eine Hauptwelle (10) längs der Hauptdrehachse (DP) parallel zu der Abtriebswelle (7) und beabstandet von der Abtriebswelle (7) trägt, oder ein benachbartes Triebmodul (1Y, 1Z) ist, das direkt oder indirekt an einem solchen Haupttriebmodul (1X) montiert ist.

2. Triebmodul (1) nach Anspruch 1, **dadurch gekennzeichnet, dass** das Triebmodul (1) ein Haupttriebmodul (1X) ist, dessen Hauptwelle (10) mindestens ein loses Empfängerrad (20) trägt, um durch ein Ausgangsdrehteil des Haupttriebmoduls (1X) angetrieben zu werden.

3. Triebmodul (1) nach Anspruch 2, **dadurch gekennzeichnet, dass** das lose Empfängerrad (20) dafür ausgelegt ist, durch ein Ausgangsdrehteil eines weiteren, benachbarten Triebmoduls (1) angetrieben zu werden, das an dem Haupttriebmodul (1X) über die flachen Anschlüsse (11, 12) direkt oder indirekt montiert ist.

4. Triebmodul (1) nach Anspruch 3, **dadurch gekennzeichnet, dass** die Hauptwelle (10) mehrere lose Empfängerräder (20, 20X, 20Y, 20Z), die voneinander unabhängig sind, wovon jedes ein Rohr (21, 21X, 21Y, 21Z) für die Aufnahme eines Anzeigers trägt und wovon jedes dafür ausgelegt ist, durch ein Ausgangsdrehteil des Haupttriebmoduls (1X) oder eines weiteren benachbarten Triebmoduls (1Y, 1Z), das direkt oder indirekt angrenzend an dem Haupttriebmodul (1X) über die flachen Anschlüsse (11, 12) montiert ist, angetrieben zu werden, und dass sämtliche Rohre (21, 21X, 21Y, 21Z), die von den Empfängerrädern (20, 20X, 20Y, 20Z) getragen werden, die auf dieselbe Hauptwelle (10) steckbar sind, koaxial und ineinander eingesetzt sind.

5. Triebmodul (1) nach Anspruch 4, **dadurch gekennzeichnet, dass** das Haupttriebmodul (1X) ein Ausgangsdrehteil umfasst, das ein Hauptausgangsdrehteil ist, dessen Zahnung axial auf einer Höhe positioniert ist, auf der sie mit einem Empfängerrad (20) kämmen kann, das ein Hauptempfängerrad (20X) ist und das auf derselben Höhe wie das Hauptausgangsdrehteil auf der Hauptwelle (10) angeordnet ist, und dass jedes Empfängerrad (20, 20Y, 20Z) mit Ausnahme des Hauptempfängerrades (20X) auf der Hauptwelle (10) auf einer Höhe positioniert ist, auf der es mit einem Ausgangsdrehteil kämmen kann, das auf derselben Höhe ein weiteres, benachbartes Triebmodul (1Y, 1Z) aufweist, das an dem Haupttriebmodul (1X) über flache Anschlüsse (11, 12) direkt oder indirekt montiert ist.

6. Triebgruppe (1000) für eine Uhr, umfassend Versorgungs- und Steuermittel (300), **dadurch gekennzeichnet, dass** die Triebgruppe (1000) ein Triebmodul (1) nach einem der Ansprüche 1 bis 5 umfasst, das ein Haupttriebmodul (1X) ist, das über Hauptanschlüsse (8) und/oder über flache Anschlüsse (11, 12) elektrisch verbunden ist mindestens entweder mit mindestens einer Struktur (200), die auch die Triebgruppe (1000) enthält, um mit dieser eine Antriebsgesamtheit (100) zu bilden, oder mit mindestens einem weiteren benachbarten Triebmodul (1Y, 1Z), das die Triebgruppe (1000) umfasst, um mit dieser eine Antriebsanordnung (400) zu bilden.

7. Triebgruppe (1000) nach Anspruch 6, **dadurch gekennzeichnet, dass** die Triebgruppe (1000) eine Antriebsgesamtheit (100) ist, die eine Struktur (200) und ein Haupttriebmodul (1X) umfasst, und dass die Hauptanschlüsse (8) für die mechanische und die elektrische Verbindung des Haupttriebmoduls (1X) so angeordnet sind, dass sie auf komplementäre Weise mit Aufnahmeräumen (80) zusammenwirken, die die Struktur (200) aufweist, wobei bestimmte der Aufnahmeräume (80) elektrisch verbunden sind mit Versorgungs- und Steuermitteln (300), die die Struktur (200) aufweist oder die ihrerseits mit der Struktur (200) elektrisch verbunden sind.

8. Triebgruppe (1000) nach Anspruch 7, **dadurch gekennzeichnet, dass** die Antriebsgesamtheit (100) ferner mindestens ein weiteres benachbartes Triebmodul (1Y, 1Z) umfasst, das direkt oder indirekt angrenzend an dem Haupttriebmodul (1X) über flache Anschlüsse (11, 12) montiert ist, wobei das weitere benachbarte Triebmodul (1Y, 1Z) angrenzend ein Ausgangsdrehteil trägt, das mit einem losen Rad (20, 20Y, 20Z) kämmt, das auf die Hauptwelle (10) des Haupttriebmoduls (1X) steckbar ist, und dass die Hauptanschlüsse (8) für eine mechanische und elektrische Verbindung, die jedes weitere benachbarte Triebmodul (1Y, 1Z) aufweist, so angeordnet sind, dass sie auf komplementäre Weise mit den Aufnahmeräumen (80) der Struktur (200) zusammenwirken.

9. Triebgruppe (1000) nach Anspruch 6, **dadurch gekennzeichnet, dass** die Triebgruppe (1000) eine Antriebsanordnung (400) ist, die ein Haupttriebmodul (1X) und mindestens ein weiteres benachbartes Triebmodul (1Y, 1Z) umfasst, das direkt oder indirekt an dem Haupttriebmodul (1X) über die flachen Anschlüsse (11, 12) montiert und mit diesem elektrisch verbunden ist, wobei das weitere benachbarte Triebmodul (1Y, 1Z) angrenzend ein Ausgangsdrehteil trägt, das mit einem losen Rad (20, 20Y, 20Z) kämmt, das auf die Hauptwelle (10) des Haupttriebmoduls (1) steckbar ist.

10. Triebgruppe (1000) nach Anspruch 9, **dadurch gekennzeichnet, dass** die Antriebsanordnung (400) eine selbsttragende Struktur bildet.

11. Triebgruppe (1000) nach einem der Ansprüche 6 bis 10, **dadurch gekennzeichnet, dass** jedes Triebmodul (1X, 1Y, 1Z), das die Triebgruppe (1000) aufweist, ein Triebmodul (1) nach Anspruch 1 ist, dass die Öffnungswinkel (θ) der Triebmodule (1X, 1Y, 1Z) der Triebgruppe (1000), die untereinander gleich sind, einen Winkelwert aufweisen, der eine ganzzahlige Teilgröße von 360° ist, und dass die flachen Anschlüsse (11, 12) der Triebmodule (1X, 1Y, 1Z) für eine kreisförmige Verbindung der Triebmodule (1X, 1Y, 1Z) um die Hauptwelle (10) herum angeordnet sind.

12. Triebgruppe (1000) nach einem der Ansprüche 6 bis 11, **dadurch gekennzeichnet, dass** die flachen Anschlüsse (11, 12) der Triebmodule (1X, 1Y, 1Z), die die Triebgruppe (1000) umfasst, für eine mechanische und elektrische Verbindung zwischen den Triebmodulen (1) angeordnet sind.

13. Triebgruppe (1000) nach einem der Ansprüche 6 bis 12, **dadurch gekennzeichnet, dass** die Hauptwelle (10) mehrere lose Empfängerräder (20, 20X, 20Y, 20Z) aufweist, die voneinander unabhängig sind, und von denen jedes dafür ausgelegt ist, durch ein Ausgangsdrehteil des Haupttriebmoduls (1X) oder eines weiteren, benachbarten Triebmoduls (1Y, 1Z) angetrieben zu werden, dass jedes Empfängerrad (20, 20X, 20Y, 20Z) ein Rohr (21, 21X, 21Y, 21Z) für die Aufnahme eines Anzeigers trägt, dass sämtliche Rohre (21, 21X, 21Y, 21Z), die die Empfängerräder (20) tragen, die auf die Hauptwelle (10) steckbar sind, koaxial und in einander eingesetzt sind, dass das Haupttriebmodul (1X) ein Hauptausgangsdrehteil umfassst, dessen Zahnung axial auf einer Höhe positioniert ist, auf der sie mit einem Hauptempfängerrad (20X) kämmen kann, das auf derselben Höhe auf der Hauptwelle (10) angeordnet ist, und dass jedes Empfängerrad (20, 20Y, 20Z) mit Ausnahme des Hauptempfängerrades (20X) auf der Hauptwelle (10) auf einer Höhe positioniert ist, auf der es mit einem Ausgangsdrehteil kämmen kann, das auf derselben Höhe ein weiteres benachbartes Triebmodul (1Y, 1Z) aufweist.

14. Triebgruppe (1000) nach einem der Ansprüche 6 bis 13, **dadurch gekennzeichnet, dass** die Antriebsgesamtheit (100) mindestens einen passiven Abschnitt (1P) mit derselben Geometrie, demselben Räderwerk, demselben Ausgangsdrehteil, denselben Steckverbindungen und denselben flachen Anschlüssen wie die benachbarten Triebmodule (1X, 1Y, 1Z) des passiven Abschnitts (1), jedoch ohne die Triebvorrichtung (4) umfasst und ein Eingangsrad aufweist, das durch ein Empfängerrad (20) des Haupttriebmoduls (1X) oder eines benachbarten Triebmoduls (1Y, 1Z) angetrieben wird, wobei das Eingangsrad dafür ausgelegt ist, das Ausgangsdrehteil des passiven Drehteils (1P) über sein Räderwerk, wovon jedes Drehteil lose ist, anzutreiben.

15. Triebgruppe (1000) nach einem der Ansprüche 6 bis 14, **dadurch gekennzeichnet, dass** die Versorgungs- und Steuermittel (300) dafür ausgelegt sind, mindestens ein Triebmodul (1) nach Anspruch 4 mit einem Zeitsignal zu steuern, derart, dass eine Anzeige einer Zeitgröße mit dem Anzeiger des betrachteten Triebmoduls (1) erfolgt.

16. Triebgruppe (1000) nach einem der Ansprüche 6 bis 15, **dadurch gekennzeichnet, dass** die Versorgungs- und Steuermittel (300) dafür ausgelegt sind, mehrere Triebmodule (1X, 1Y, 1Z) nach Anspruch 4 mit unterschiedlichen Zeitsignalen zu steuern, derart, dass eine Anzeige einer für jeden der Anzeiger der betrachteten Triebmodule (1X, 1Y, 1Z) verschiedenen Zeitgröße erfolgt.

17. Uhr (2000), umfassend mindestens ein Triebmodul (1) nach einem der Ansprüche 1 bis 5 und/oder eine Triebgruppe (1000) nach einem der Ansprüche 6 bis 16.

## Claims

1. Motor module (1) for watches, inscribed in an angular sector around a main pivot axis (DP), said angular sector having an opening angle (θ) with respect to said main pivot axis (DP), said motor module (1) comprising at least one motor (4) comprising a coil (5) and driving a gear train (6), all the wheel sets of which pivot about parallel axes, said gear train (6) comprising at least one secondary output arbor (7) that defines a secondary pivot axis (DS) parallel to said main axis (DP), said secondary output arbor (7) either being arranged to carry an output wheel set pivoting about said secondary pivot axis (DS), or directly comprising such output wheel set, said motor module (1) comprising main connections (8) for a, at least electrical, connection with a structure (200) or with another motor module (1), and flat links (11, 12) at least mechanically arranged to cooperate in a geometrically indexed attachment, in a plane perpendicular to said output shaft (7), with another motor module (1) of the same type, each said coil (5) being electrically connected to two said flat links (11, 12) when said flat links (11, 12) are also electrical power and/or control links, said flat links (11, 12) comprising link means (11) and complementary link means (12), said link means (11) being arranged to cooperate in a link attachment, in a plane perpendicular to said output arbor (7), with said complementary link means (12) of another motor module (1), and said complementary link means (12) being arranged to cooperate in a link attachment, in a plane perpendicular to said secondary pivot axis (DS), with said link means (11) of another motor module (1), and in that said link means (11) and said complementary link means (12) define said opening angle (θ) of said angular sector, said motor module (1) being either a main motor module (1X) that carries a main arbor (10) on said main pivot axis (DP), parallel to said output shaft (7), and distant from said output shaft (7), or a nearby motor module (1Y, 1Z) assembled directly or indirectly to such a main motor module (1X).

2. Motor module (1) according to claim 1, **characterized in that** said motor module (1) is a said main motor module (1X), said main shaft (10) of which carries at least one idle receiving wheel (20) arranged to be driven by a said output wheel set of said main motor module (1X).

3. Motor module (1) according to claim 2, **characterized in that** said idle receiving wheel (20) is arranged to be driven by a said output wheel set of another nearby motor module (1), directly or indirectly assembled to said main motor module (1X) by said flat links (11, 12).

4. Motor module (1) according to claim 3, **characterized in that** said main arbor (10) carries a plurality of idle receiving wheels (20, 20X, 20Y, 20Z), independent of each other, each carrying a tube (21, 21X, 21Y, 21Z) for receiving a display, and each arranged to be driven by a said output wheel set of said main motor module (1X) or of another nearby motor module (1Y, 1Z) directly or indirectly assembled to said main motor module (1X) by said flat links (11, 12), and **in that** all said tubes (21, 21X, 21Y, 21Z) carried by said receiving wheels (20, 20X, 20Y, 20Z), fitted on the same said main arbor (10), are coaxial and interior to each other.

5. Motor module (1) according to claim 4, **characterized in that** said main motor module (1X) comprises a said output wheel set which is a main output wheel set, whose toothing is axially positioned at a height suitable for meshing with a said receiving wheel (20) which is a main receiving wheel (20X) and which is situated at the same height as said main output wheel set on said main arbor (10), and **in that** each said receiving wheel (20, 20Y, 20Z), other than said main receiving wheel (20X), is positioned on said main arbor (10) at a height at which it can mesh with a said output wheel set comprised, at the same height, in another nearby motor module (1Y, 1Z), directly or indirectly assembled to said main motor module (1X) by said flat links (11, 12).

6. Motorization group (1000) for watches, comprising power and control means (300), **characterized in that** said motorization group (1000) includes a main motor module (1) according to any of claims 1 to 5 and which is a said main motor module (1X), electrically connected by said main connectors (8), and/or by said flat links (11, 12), at least, either at least to a structure (200) also comprised in said motorization group (1000) to form therewith a motor unit (100), or to at least one other motor module (1Y, 1Z) comprised in said motorization group (1000) to form therewith a motor assembly (400).

7. Motorization group (1000) according to claim 6, **characterized in that** said motorization group (1000) is a said motor unit (100) comprising a structure (200) and a said main motor module (1X), and **in that** said main connectors (8) for mechanical and electrical connection of said main motor module (1X) are arranged to cooperate in a complementary manner with housings (80) comprised in said structure (200), wherein some of said housings (80) are electrically connected to power and control means (300) comprised in said structure (200) or which are themselves electrically connected to said structure (200).

8. Motorization group (1000) according to claim 7, **characterized in that** said motor unit (100) further includes at least one other nearby motor module (1Y, 1Z), directly or indirectly assembled to said main motor module (1X) by said flat links (11, 12), and said other nearby motor module (1Y, 1Z) carrying a said output wheel set meshing with an idle wheel (20, 20Y, 20Z) fitted on said main arbor (10) of said main motor module (1X), and **in that** said main connectors (8) for mechanical and electrical connection comprised in each said other nearby motor module (1Y, 1Z), are arranged to cooperate in a complementary manner with said housings (80) of said structure (200).

9. Motorization group (1000) according to claim 6, **characterized in that** said motorization group (1000) is a said motor assembly (400) comprising a said main motor module (1X), and at least one other nearby motor module (1Y, 1Z), directly or indirectly assembled and electrically connected to said main motor module (1X) by said flat links (11, 12), and said other nearby motor module (1Y, 1Z) carrying a said output wheel set meshing with an idle wheel (20, 20Y, 20Z) fitted on said main arbor (10) of said main motor module (1X).

10. Motorization group (1000) according to claim 9, **characterized in that** said motor assembly (400) forms a self-supporting structure.

11. Motorization group (1000) according to any of claims 6 to 10, **characterized in that** each said motor module (1X, 1Y, 1Z) comprised in said motorization group (1000) is a motor module (1) according to claim 1, **in that** said opening angles (θ) of said motor modules (1X, 1Y, 1Z), that said motorization group (1000) comprises are equal between them, with an angular value that is an integer sub-multiple of 360°, and **in that** said flat links (11, 12) of said motor modules (1X, 1Y, 1Z) are arranged for a circular connection of said motor modules (1X, 1Y, 1Z) around said main arbor (10).

12. Motorization group (1000) according to any of claims 6 to 11, **characterized in that** said flat links (11, 12) of said motor modules (1X, 1Y, 1Z) comprised in said motorization group (1000) are arranged for a mechanical and electrical connection between said motor modules (1).

13. Motorization group (1000) according to any of claims 6 to 12, **characterized in that** said main arbor (10) carries a plurality of idle receiving wheels (20, 20X, 20Y, 20Z), independent of each other, and each arranged to be driven by a said output wheel set of said main motor module (1X) or of another nearby motor module (1Y, 1Z), and **in that** each said receiving wheel (20, 20X, 20Y, 20Z) carries a tube (21, 21X, 21Y, 21Z) for receiving a display, **in that** all said tubes (21, 21X, 21Y, 21Z) carried by said receiving wheels (20), fitted on said main arbor (10), are coaxial and interior to each other, **in that** said main motor module (1X) comprises a said main output wheel set whose toothing is axially positioned at a height suitable for meshing with a said main receiving wheel (20X) situated at the same height on said main arbor (10), and **in that** each said receiving wheel (20, 20Y, 20Z), other than said main receiving wheel (20X), is positioned on said main arbor (10) at a height at which it can mesh with a said output wheel set comprised, at the same height, in another nearby motor module (1Y, 1Z).

14. Motorization group (1000) according to any of claims 6 to 13, **characterized in that** said motor unit (100) comprises at least one passive sector (1P) having the same geometry, gear train, output wheel set, plug-in connectors and flat links, as said nearby motor modules (1X, 1Y, 1Z) of said passive sector but devoid of said motor (4), and which includes an input wheel driven by a said receiving wheel (20) of said main motor module (1X) or of a said nearby motor module (1Y, 1Z), said input wheel being arranged to drive said output wheel of said passive wheel set (1P) via its said gear train, every wheel set of which is idle.

15. Motorization group (1000) according to any of claims 6 to 14, **characterized in that** said power and control means (300) are arranged to control at least one said motor module (1) according to claim 4 with a time signal, to effect a display of a time magnitude with said display of said motor module (1) concerned.

16. Motorization group (1000) according to any of claims 6 to 15, **characterized in that** said power and control means (300) are arranged to control a plurality of said motor modules (1X, 1Y, 1Z) according to claim 4 with different time signals, to effect a display of a different time magnitude on each of said displays of said motor modules (1X, 1Y, 1Z) concerned.

17. Watch (2000) comprising at least one motor module (1) according to any of claims 1 to 5 and/or one motorization group (1000) according to any of claims 6 to 16.
